Europäisches Patentamt

European Patent Office

Office européen des brevets

(11) Publication number: **0 139 002 B1**

# EUROPEAN PATENT SPECIFICATION

(45) Date of publication of patent specification: **08.07.92**  (51) Int. Cl.5: **C02F  9/00**

(21) Application number: **84901869.2**

(22) Date of filing: **13.04.84**

(86) International application number:
**PCT/US84/00579**

(87) International publication number:
**WO 84/04087 (25.10.84 84/25)**

(54) **MOBILE FLUID PURIFICATION UNIT.**

(30) Priority: **15.04.83 US 485479**

(43) Date of publication of application:
**02.05.85 Bulletin  85/18**

(45) Publication of the grant of the patent:
**08.07.92 Bulletin  92/28**

(84) Designated Contracting States:
**DE FR GB NL**

(56) References cited:
| | |
|---|---|
| DE-A- 2 206 735 | GB-A- 2 007 637 |
| US-A- 2 938 868 | US-A- 3 329 272 |
| US-A- 3 630 365 | US-A- 3 985 648 |
| US-A- 4 049 548 | US-A- 4 219 413 |
| US-A- 4 383 920 | |

(73) Proprietor: **ECOLOCHEM, INC.**
**4545 Patent Road**
**Norfolk, VA 23502(US)**

(72) Inventor: **Muller, Richard S.**
**10504 Weltham Drive**
**Richmond, Virginia 23233(US)**
Inventor: **Dickerson, Richard C.**
**1609 Moore's Lane**
**Virginia Beach, Virginia 23455(US)**

(74) Representative: **UEXKÜLL & STOLBERG Paten-**
**tanwälte**
**Beselerstrasse 4**
**W-2000 Hamburg 52(DE)**

**Description**

Background of the Invention

Field of the Invention

The invention is in the field of liquid purification or separation apparatus. More particularly, the invention relates to a mobile liquid purification unit and systems including a plurality of units.

Description of the Prior Art

The prior art includes U.S. Patent No. 4,049,548 to Dickerson which discloses a mobile demineralizer for water treatment having two successive banks of mixed-bed ion exchange resin cylinders which produce extremely high quality water.

Experience has shown that the mixed-bed ion exchange resin cylinders used in the mobile demineralizer of that earlier patent produce a water quality that may be much higher in quality than many industrial water purification customers require, thus creating an economic and chemical inefficiency. Furthermore, the ion exchange resin cylinders used in that invention cannot be regenerated in situ, but must be disconnected and removed from the mobile demineralizer and transported to a regeneration station.

US-A-4 219 413 discloses a method and apparatus for treating water with a regeneratable material. A plurality of liquid purification units is stationary mounted and connected by pipes to allow a flow of liquid in various flow patterns.

US-A- 4 383 920, discloses a mobile liquid purification system with a multiplicity of purification treatment tanks which can be connected in parallel, in series, or in a combination of parallel and series. Each of the treatment tanks can be filled with one or more purification treatment materials selected from among the multiplicity of available purification materials. The system described in US-A- 4 383 920 includes a vehicle and three or more treatment tanks, and the embodiment illustrated shows six treatment tanks mounted in a trailer. However, in a number of uses, a smaller capacity is required than that provided by the illustrated embodiment. In addition, changes in required capacity arise which can be satisfied by the addition or subtraction of mobile units smaller than the system embodied by the illustrated trailer.

Summary of the invention

In order to attain greater flexibility than previous purification systems, the mobile purification system according to the present invention comprises a
mobile liquid purification unit comprising:
- a vehicle;
- a set of three or more liquid purification treatment tanks, each of said treatment tanks containing a liquid purification treatment material, each of said treatment tanks further having a liquid inlet, a liquid outlet, a purification treatment material inlet, and a purification treatment material outlet;
- a unit inlet means adapted to be connected to a source of raw liquid to be purified;
- a unit outlet means for delivering purified liquid;
- liquid conduit means and valve means for conveying said raw liquid from said unit inlet means to said treatment tanks and between said treatment tanks and from said treatment tanks to said unit outlet means, said conduit means and said valve means being connected to said treatment tanks; and
- measuring means for monitoring the quality of the purified liquid outlet;
    **characterized** in that the liquid purification unit is mobile by being mounted on the vehicle;
    that one or more crossover hoses are provided; and
    that the treatment tanks can be operated selectively in serial, parallel, and combined serial/parallel modes by adjusting liquid flow with the aid of said valve means and said one or more crossover hoses.

The mobile liquid purification unit of the present invention is capable of being precisely tailored to the needs of the particular industrial liquid purification job by virtue of the fact that the unit can be configured in a multitude of operating modes. A preliminary chemical analysis of the raw liquid is performed and, on the basis of that analysis, the mobile unit is configured in such a way as to satisfy the job requirements.

Brief Description of the Drawings

Fig. 1 is a perspective view of a mobile liquid purification unit according to the present invention;

Fig. 2 is a schematic illustration of an arrangement of two mobile liquid purification units on a trailer;

Fig. 3 is a schematic illustration of piping for one of the mobile liquid purification units of Fig. 2; and

Fig. 4 is a perspective view of a cover for the arrangement of Fig. 2.

Modes for Carrying Out the Invention

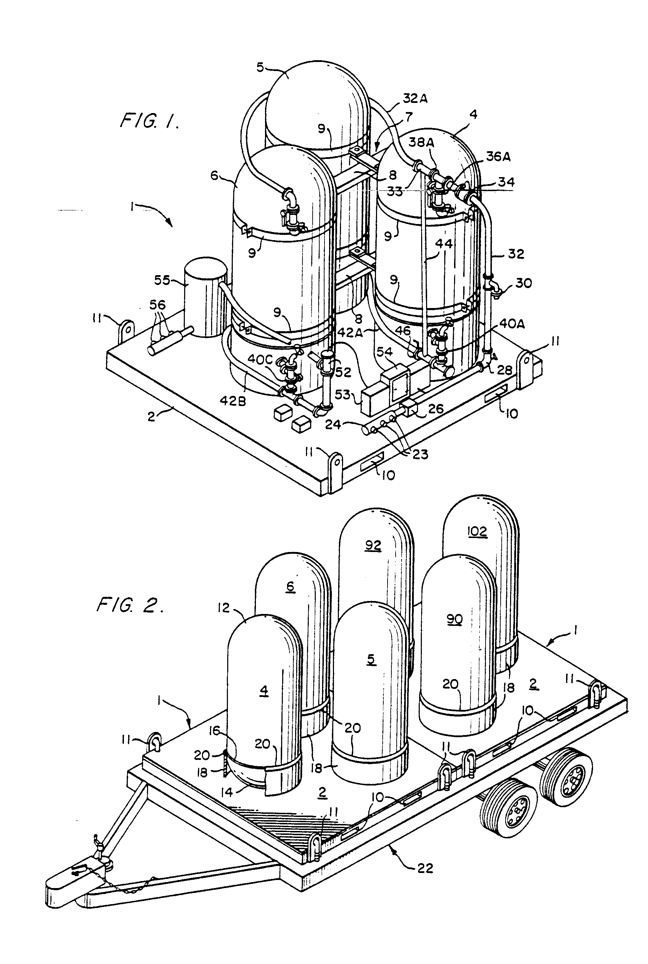

The drawings and the following description illustrate specific working examples of the invention in the field of water purification. As can be seen in Fig.1, the system comprises a mobile liquid purification unit according to the present invention, generally designated by the reference numeral 1, which includes a skid 2 or other vehicle for carrying three water purification treatment tanks 4, 5 and 6 and associated valves and fluid connections. A support structure, generally designated by the reference numeral 7, is mounted on the skid 2 to maintain the tanks 4-6 fixed in their upright positions. The support structure includes horizontal rails 8 and bands 9, connected to the rails 8, which encircle the tanks 4-6. The skid 2 includes slots 10 for receiving a forklift and lifting lugs 11 for lifting by a crane. Each tank has heads 12 and 14 and an integral circumferential bead 16 on its cylindrical portion just above the lower head 14. The lower head 14 is received in a mating support sleeve or base 18 secured to the skid 2 so that the bead 16 rests on the rim of the sleeve. The tank is joined to the sleeve 18 at the bead by a suitable bonding agent 20.

Although other vehicles for carrying the tanks 4-6 can be used to comprise a mobile fluid purification unit 1, platforms such as the skid 2 are especially effective because of their simplicity and lightweight, their flexibility of application in being used alone or in connection with similar skids, and their ability to be mounted on larger vehicles, such as trailers, to which they can be secured by any suitable means. Three is an especially efficient number of tanks for use in a single mobile liquid purification unit 1 because it is the smallest number which is capable of being operated in series, in parallel, and in a combination of series and parallel. However, it is understood that, where capacity requirements and other application factors dictate, four or more tanks could be mounted on a skid to define a single mobile purification unit.

Therefore, a single mobile liquid purification unit 1 has the flexibility for treating relatively large flow rates of liquid in one manner, or treating smaller flow rates of liquid in several respects. For example, one tank could contain commercially-available cation exchange resins which remove cations such as calcium, magnesium, sodium and potassium ions from raw water. A second tank could contain commercially-available anion exchange resins which remove anions such as sulfate, chloride, bicarbonate, and carbonate ions from the water. The third tank could contain a mixed-bed ions exchange resin (demineralizer). As an alternative, all three tanks could contain sand to act as sand filters for the removal of suspended material. Many other treatment modes can be carried out within a single mobile fluid purification unit 1, as will be seen from a table to be described hereinafter. Furthermore, additional mobile liquid purification units 1 can be mounted on a larger vehicle, such as the trailer 22 of Fig. 2, adjacent the first mobile unit 1 and placed in fluid communication with the first mobile unit by making a minimal number of connections using flexible conduits. The use of multiple mobile units in this manner provides even greater flexibility in the number of treatments which can be carried out in the process and the flow capacity of each treatment.

Raw water is received from the customer's source via one or more water inlet connections 23. Hose nipples are attached to the outside body of an inlet strainer 24. The purpose of this strainer is to prevent foreign bodies from entering the unit. After leaving the strainer, the flow is measured in an indicating and recording flow meter 26. If the raw water source is under high pressure, a pressure reducing valve 28 can be included downstream from the flow meter 26. This valve reduces the incoming pressure to that suitable for the system, and prevents overloads in the system from occurring. A rupture disc 30 can also be mounted in this inlet piping to protect the system from pressure overload.

The water is then carried by a conduit, such as a rubber hose 32, to permit flexing when the mobile unit 1 is subject to impacts and vibration during handling and travelling. Before reaching the first tank 4, any entrapped air in the hose is released through an air release valve 34. This valve serves a dual purpose in that it admits air during the draining of the system to prevent a vacuum from being imposed in the system and it removes air from the system during start up and normal operation.

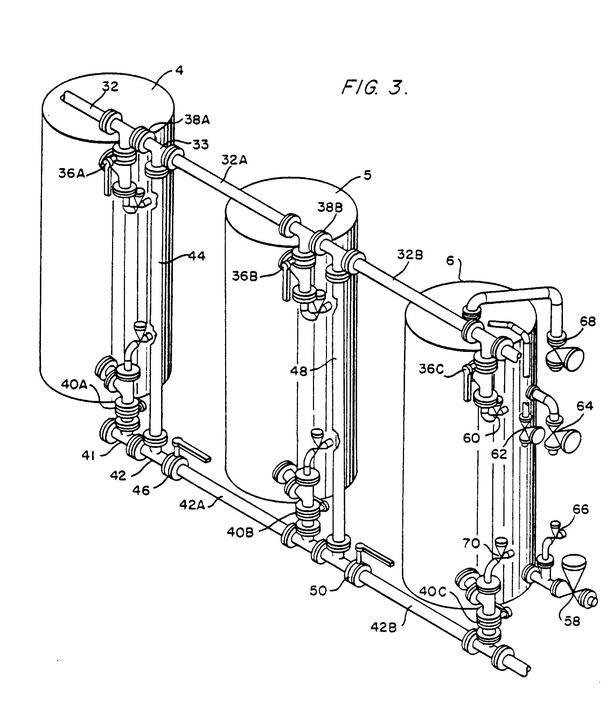

As can be seen from the schematic illustration of Fig. 3, the raw water delivered by the hose 32 enters at the top of the tank 4 through a water inlet valve 36A. Incoming water is prevented from continuing to a tee 33 and an upper hose 32A by a blind flange 38A. The tank 4 contains, in this example, commercially-available cation exchange resins which remove cations such as calcium, magnesium, sodium, and potassium ions from the raw water. The water passes down through the cation resin in the tank 4 and goes through a water outlet valve 40A into tees 41 and 42. The water is diverted up through a crossover hose 44, which is connected between the tee 42 and the tee 33 at a point downstream of the blind flange 38A, since the valve 46, which is mounted in between the tee 42 and the connecting hose 42A, is closed. The

3

connecting hose 42A connects the valve 46 to a tee downstream of an outlet valve 40B associated with the outlet of the tank 5 to permit the connection of the tank 4 in parallel with the tank 5, when desired.

The tank 5 operates in series with the tank 4 by the connection of the upper hose 32A to the water inlet valve 36B at the top of the tank 5. The tank 5 contains, in this example, commercially-available anion exchange resins which remove anions such as sulfate, chloride, bicarbonate, and carbonate ions from the water. The incoming water is prevented from continuing to a top hose section 32B by a blind flange 38B. Water passes down through the anion exchange resin in the tank 5 and exits through the outlet valve 40B. The outlet valve 40B of the tank 5 is connected to the lower connecting hose 42B. The water is then diverted vertically through a crossover hose 48 by having closed valve 50 positioned in a lower connecting hose 42B just downstream of the inlet to the crossover hose 48. This diverts the flow into the tank 6, which in this example contains a mixed-bed ion exchange resin, the flow entering at the top of the tank 6 through an inlet valve 36C, passing down through the bed inside the tank 6, and leaving through an outlet valve 40C as in the previous tanks.

At this point, the entire flow from the system is measured for its quality by a conductivity cell 52 (Fig. 1). The output from the conductivity cell 52 is measured and recorded on a conductivity monitor 53. This monitor has adjustable set points, and should the quality of the water being delivered be below the set point, then the conductivity monitor 53 provides an electrical signal to the pressure reducing valve 28, which will cause it to close. At the same time, the system can be arranged to sound an alarm to alert the operator that the water quality is below the set point, and has been shut off. To protect the system from high ambient temperatures, a temperature measuring and alarm system 54 will sound an alarm and can be connected (if desired) to close the pressure reducing valve 28. Following this, the flow passes through a resin trap and strainer filter 55. The purpose of the resin trap 55 is to catch any resin which might leave the system and to prevent it from getting into the water system to which outlets 56 of the mobile water purification unit 1 are connected. Although some detail is shown in Fig. 3, the figure is intended to be schematic in nature to show the arrangement of valves and hoses. The tanks 4-6 are not necessarily in a straight line arrangement like the ones shown in Fig. 3, this fact being clear from the arrangement shown in Figs. 1 and 2.

The configuration described in the foregoing example represents the use of the system when tanks 4, 5 and 6 are connected in series. One of the features of this system is complete flexibility of use. For example, it may be desired to have tanks 4 and 5 in parallel, and their combined effluent going to tank 6. In such a configuration, the crossover hose 44, and the blind flange 38A would be removed from between tanks 4 and 5 and valve 46 opened. This would put tanks 4 and 5 in parallel operation, with their total flow going into tank 6.

It is also possible, by other changes in piping, to utilize one or more of the tanks as sand filters for the removal of suspended material, to use them as activated carbon filters ahead of a demineralizer system, or for uses other than demineralization. For example, the equipment could be used with all three tanks in parallel (i.e., with no crossover hoses) as a three tank sodium zeolite softener. This system, by virtue of its flexibility, could also be used for other special applications whereby ion exchange resins are used for the removal of ions from a solution.

In certain cases, where the flow path of the liquid through the tanks may remain unchanged, to merely provide a single inlet valve adjacent to the inlet connections 23 and a single outlet valve adjacent to the outlet connections 56, and eliminate all of the valves associated with the individual tanks.

The following table illustrates some of the modes in which the unit 1 may be configured and operated:

| Treatment Material: | TANK NO. | | | MODE OF OPERATION |
|---|---|---|---|---|
| | 4 | 5 | 6 | |
| (a) | sand | sand | sand | all tanks in parallel |
| (b) | activated carbon | activated carbon | activated carbon | all tanks in parallel |
| (c) | cation | cation | cation | all tanks in parallel |
| (d) | cation/anion | cation/anion | cation/anion | all tanks in parallel |
| (e) | scavenging resin | scavenging resin | scavenging resin | all tanks in parallel |
| (f) | cation | cation | anion | parallel/series; tanks 4 and 5 in parallel; tank 6 in series |
| (g) | cation | anion | anion | parallel/series; tank 4 in series; tanks 5 and 6 in parallel |
| (h) | cation | weak base anion | strong base anion | all tanks in series |

Equipment may be provided by which the tanks may be regenerated by removing the resins from the unit, in which case connections are made to a resin outlet valve 58 at the bottom of each tank, one of which is shown on tank 6 in Fig. 3. Sluicing water may be added to the tank via a regeneration inlet valve 60, a vent valve 62, or a spray valve 64, depending upon the particular desired result. Should additional sluicing water be required, or should a stoppage in the resin outlet be encountered, additional water may be injected

5

via a valve 66. This same valve will also provide additional sluicing water in the resin out line, if necessary. The spray valve 64 is connected internally with a spray water system which is used in removing the resin from the tanks. Regenerated resin is replaced in each tank through a resin inlet valve 68 located at the top of each tank. For simplicity, not all of the valves have been shown in the drawing. For example, valves 58, 60, 62, 64, 66 and 68 are identical on each tank. Furthermore, such valves may be used in connection with the tanks of Fig. 1, but have been omitted from Fig. 1 for clarity of illustration of the other features of the invention.

The foregoing regeneration refers to an operation in which the ion exchange resins are removed from the tanks and regenerated. Should it be necessary or desirable to regenerate the resins in the tanks, the necessary regenerants are injected through the regeneration inlet valve 60 in each tank, and removed from each tank through a regeneration outlet valve 70. These valves, when connected to the proper sources, and when opened, will allow regeneration chemicals to be injected into and then removed from the tanks. During this regeneration operation, the water inlet valves 36 A-C and the water outlet valves 40 A-C must be closed to isolate each tank from the rest of the mobile unit. The vent valve 62 is provided in each tank to relieve air which may be in the tanks when they are filled, and to add air when draining. It is also a way of adding additional water to the tanks. By virtue of the design of the mobile unit, the tanks can be backwashed in place prior to regeneration. In this case, backwash water would be admitted through the valve 70 and removed through the regeneration inlet valve 60 or through the resin inlet valve 65.

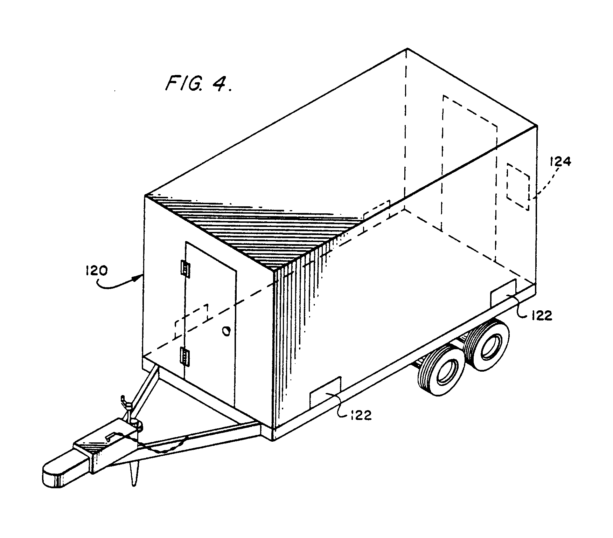

For many applications, the mobile units 1 can be exposed to the elements. However, where the units would be subjected to cold, that is, temperatures below 35°F, protection should be provided since ion exchange resins are susceptible to rapid deterioration at low temperatures. In such cases, the mobile unit 1, or a plurality of mobile units 1, are provided with a cover such as a doghouse cover, as is designated by the reference numeral 120 in Fig. 4. In addition, access doors 122 can be provided in appropriate places in the walls of the cover 120 to provide access to hose connections. Furthermore, a heater 124 is provided to maintain the temperature inside the cover above 35°F under the most extreme outside temperature combinations. Any suitable heater, such as an electric heater or a gas heater, may be used. A high temperature alarm and a low temperature alarm may be provided.

The important features of the inventive system are that it is very flexible in its use, it has a variety of applications through not only piping flexibility, but also because of the number of tanks and the various combinations of resin which they can contain. Not only is this system suitable as mentioned above for use with resins, but for any other water treatment processes which require a pressure vessel and the passing of the water through a fixed bed of material, whether that material be sand, activated carbon, ion exchange resin, or a special catalyst that is used in some highly specific industry.

In this system, all of the tanks are interconnected using hose. The reason for this is to prevent possible difficulties with the piping system if it were to be connected with rigid pipe. The trailer 22 may deform slightly and the relative positions of adjacent skids may shift. Hose is used so that each tank is individual and can move independently of the others without damage to itself or to the other tanks. Further, by use of flanged piping, the piping can be rearranged to allow the use of the tanks in series, in parallel, or in a combination of series and parallel.

The above-described embodiments are intended to be illustrative, not restrictive. The full scope of the invention is defined by the claims, and any and all equivalents are intended to be embraced therein.

**Claims**

1. A mobile liquid purification unit comprising:
   - a vehicle;
   - a set of three or more liquid purification treatment tanks, each of said treatment tanks containing a liquid purification treatment material, each of said treatment tanks further having a liquid inlet, a liquid outlet, a purification treatment material inlet, and a purification treatment material outlet;
   - a unit inlet means adapted to be connected to a source of raw liquid to be purified;
   - a unit outlet means for delivering purified liquid;
   - liquid conduit means and valve means for conveying said raw liquid from said unit inlet means to said treatment tanks and between said treatment tanks and from said treatment tanks to said unit outlet means, said conduit means and said valve means being connected to said treatment tanks; and
   - measuring means for monitoring the quality of the purified liquid outlet;
     **characterized** in that the liquid purification unit is mobile by being mounted on the vehicle;
     that one or more crossover hoses are provided; and

6

that the treatment tanks can be operated selectively in serial, parallel, and combined serial/parallel modes by adjusting liquid flow with the aid of said valve means and said one or more crossover hoses.

2. The unit of claim 1 wherein the conduit means comprise flexible conduits.

3. The unit of claim 2 wherein the flexible conduits are hoses.

4. The unit of claim 1 wherein slots are defined in the edges of the vehicle to accommodate a fork lift.

5. The unit of claim 1 wherein each tank includes a circumferential bead adjacent one end thereof, and a sleeve is mounted on the vehicle for each tank, the bead of each tank engaging a respective sleeve.

6. The unit of claim 5 wherein each tank is joined to its respective sleeve by a bonding agent.

7. The unit of claim 1 wherein lifting lugs are provided on the vehicle.

8. The unit of claim 1 wherein brace means are provided on the vehicle for securing the tanks in an upright position.

9. The unit of claim 8 wherein the brace means comprises a rail mounted on the vehicle, and bands encircling the tanks and connected to the rail.

10. The unit of claim 1 further comprising a cover for said unit, the cover being mounted on the vehicle.

11. The unit of claim 1 wherein each of said treatment tanks further includes a regeneration liquid inlet and a regeneration liquid outlet, whereby the purification treatment material in each of said treatment tanks is capable of being regenerated in situ.

12. The unit of claim 5, wherein each tank has a substantially rounded lower end.

13. The unit of claim 5, wherein said bead is adjacent the lower end of each tank.

14. The unit of claim 5, wherein the bead engages the rim of said sleeve.

15. A mobile liquid purification system comprising a plurality of mobile liquid purification units of one of claims 1-11 wherein the mobile system further comprises at least one fluid connection between each of said units and at least one other of said units, the unit liquid inlet means of one of said units being a system inlet means adapted to be connected to a source of raw liquid to be purified, and the unit liquid outlet means of one of the units being a system outlet means for delivering purified water.

16. The system of claim 15 wherein the vehicles are skids.

17. The system of claim 15 wherein the vehicles of each unit are mounted adjacent one another on a larger vehicle.

18. The system of claim 17 wherein the larger vehicle is a trailer.

19. The system of claim 16 wherein a cover encloses the system.

20. The system of claim 19 wherein access openings are defined in the cover adjacent the system inlet means and outlet means.

21. The system of claim 15 wherein at least one fluid connection between each of said units and at least one other of said units is a hose.

22. The system of claim 15 wherein each of said treatment tanks further includes a regeneration liquid inlet and a regeneration liquid outlet, whereby the purification treatment material in each of said treatment tanks is capable of being regenerated in situ.

EP 0 139 002 B1

**Revendications**

1. Unité mobile de purification de liquides comprenant :
   - un véhicule ;
   - un ensemble d'au moins trois réservoirs de traitement de purification de liquides, chacun desdits réservoirs de traitement contenant une matière de traitement de purification du liquide, chacun desdits réservoirs de traitement ayant en outre une entrée de liquide, une sortie de liquide, une entrée de matière de traitement de purification et une sortie de matière de traitement de purification ;
   - un moyen formant entrée d'unité adapté pour être relié à une source de liquide brut à purifier ;
   - un moyen formant sortie d'unité pour délivrer du liquide purifié ;
   - des moyens formant conduits de liquide et des moyens formant soupapes pour transporter ledit liquide brut dudit moyen formant entrée d'unité auxdits réservoirs de traitement et entre lesdits réservoirs de traitement et desdits réservoirs de traitement audit moyen formant sortie d'unité lesdits moyens formant conduits et lesdits moyens formant soupapes étant reliés auxdits réservoirs de traitement ; et
   - des moyens de mesure pour surveiller la qualité de la sortie de liquide purifié ;
   caractérisée par le fait :
   - que l'unité de purification de liquides est mobile en étant montée sur le véhicule ;
   - qu'un ou plusieurs tuyaux souples de jonction sont prévus; et
   - que les réservoirs de traitement peuvent être mis en service sélectivement en série, en parallèle, et dans des modes combinés série/parallèle, par ajustement de l'écoulement du liquide à l'aide desdits moyens formant soupapes et dudit (ou desdits) tuyau(x) souple(s) de jonction.

2. Unité selon la revendication 1, dans laquelle les moyens formant conduits comprennent des conduits flexibles.

3. Unité selon la revendication 2, dans laquelle les conduits flexibles sont des tuyaux souples.

4. Unité selon la revendication 1, dans laquelle des fentes sont définies sur les bords du véhicule pour recevoir un élévateur à fourche.

5. Unité selon la revendication 1, dans laquelle chaque réservoir comprend un bourrelet périphérique adjacent à l'une de ses extrémités, et un manchon est monté sur le véhicule pour chaque réservoir, le bourrelet de chaque réservoir venant en prise avec un manchon respectif.

6. Unité selon la revendication 5, dans laquelle chaque réservoir est réuni à son manchon respectif par un agent de liaison.

7. Unité selon la revendication 1, dans laquelle des taquets de levage sont disposés sur le véhicule.

8. Unité selon la revendication 1, dans laquelle des moyens d'amarrage sont disposés sur le véhicule pour fixer les réservoirs dans une position verticale.

9. Unité selon la revendication 8, dans laquelle les moyens d'amarrage comprennent un rail monté sur le véhicule, et des bandes encerclant les réservoirs et reliées au rail.

10. Unité selon la revendication 1, comprenant en outre un couvercle pour ladite unité, le couvercle étant monté sur le véhicule.

11. Unité selon la revendication 1, dans laquelle chacun desdits réservoirs de traitement comprend en outre une entrée de liquide de régénération et une sortie de liquide de régénération, ce par quoi la matière de traitement de purification dans chacun desdits réservoirs de traitement est susceptible d'être régénérée in situ.

12. Unité selon la revendication 5, dans laquelle chaque réservoir a une extrémité inférieure sensiblement arrondie.

8

**13.** Unité selon la revendication 5, dans laquelle ledit bourrelet est adjacent à l'extrémité inférieure de chaque réservoir.

**14.** Unité selon la revendication 5, dans laquelle le bourrelet est en prise avec le rebord dudit manchon.

**15.** Système mobile de purification de liquides comprenant une pluralité d'unités mobiles de purification de liquides, telles que définies à l'une des revendications 1 à 11, dans lequel le système mobile comprend en outre au moins une connexion de fluide entre chacune desdites unités et au moins une autre desdites unités, le moyen formant entrée de liquide dans l'unité de l'une desdites unités étant un moyen formant entrée dans le système, adapté pour être relié à une source de liquide brut à purifier, et le moyen formant sortie de liquide de l'unité de l'une des unités étant un moyen formant sortie de système pour délivrer de l'eau purifiée.

**16.** Système selon la revendication 15, dans lequel les véhicules sont des patins.

**17.** Système selon la revendication 15, dans lequel les véhicules de chaque unité sont montés adjacents l'un à l'autre sur un véhicule plus grand.

**18.** Système selon la revendication 17, dans lequel le véhicule plus grand est une remorque.

**19.** Système selon la revendication 16, dans lequel un couvercle enferme le système.

**20.** Système selon la revendication 19, dans lequel des ouvertures d'accès sont définies dans le couvercle adjacentes au moyen formant entrée dans le système et au moyen formant sortie du système.

**21.** Système selon la revendication 15, dans lequel au moins une connexion de fluide entre chacune desdites unités et au moins une autre desdites unités est un tuyau souple.

**22.** Système selon la revendication 15, dans lequel chacun desdits réservoirs de traitement comprend en outre une entrée de liquide de régénération et une sortie de liquide de régénération, ce par quoi la matière de traitement de purification dans chacun desdits réservoirs de traitement est capable d'être régénérée in situ.

**Patentansprüche**

**1.** Bewegliche Flüssigkeitsreinigungseinheit mit:
- einem Fahrzeug;
- einem Satz von drei oder mehr Flüssigkeitsreinigungsbehandlungstanks, wobei jeder Behandlungstank ein Flüssigkeitsreinigungsmaterial enthält und wobei jeder Behandlungstank weiterhin einen Flüssigkeitseinlaß, einen Flüssigkeitsauslaß, einen Einlaß für das Reinigungsbehandlungsmaterial und einen Auslaß für das Reinigungsbehandlungsmaterial enthält;
- einer Einlaßvorrichtung für die Einheit, die mit einer Zufuhr von zu reinigender Rohflüssigkeit verbindbar ist;
- einer Auslaßvorrichtung für die Einheit zum Ablassen gereinigter Flüssigkeit;
- einer Flüssigkeitsleitungsvorrichtung und einer Ventilvorrichtung zum Transport der Rohflüssigkeit von der Einlaßvorrichtung der Einheit zu den Behandlungstanks und zwischen den Behandlungstanks und von den Behandlungstanks zu der Auslaßvorrichtung der Einheit, wobei die Leitungsvorrichtung und die Ventilvorrichtung mit den Behandlungstanks verbunden sind; und
- einer Meßvorrichtung zur Überwachung der Qualität des gereinigten Flüssigkeitsauslasses;
   **dadurch gekennzeichnet,** daß die Flüssigkeitsreinigungseinheit durch Anbringung auf dem Fahrzeug beweglich ist;
   daß ein oder mehrere Kreuzungsschläuche vorhanden sind; und
   daß die Behandlungstanks mit Hilfe der Ventilvorrichtung und des einen oder der mehreren Kreuzungsschläuche wahlweise nacheinander, parallel und kombiniert nacheinander und parallel betrieben werden können.

**2.** Einheit nach Anspruch 1, wobei die Leitungsvorrichtung flexible Leitungen aufweist.

**3.** Einheit nach Anspruch 2, wobei die flexiblen Leitungen Schläuche sind.

**4.** Einheit nach Anspruch 1, wobei sich an den Ecken des Fahrzeugs Schlitze befinden, um Gabeln eines Gabelstaplers aufzunehmen.

**5.** Einheit nach Anspruch 1, wobei jeder Tank nahe dem einen Ende eine umlaufende Manschette aufweist und auf dem Fahrzeug für jeden Tank eine Hülse angebracht ist, auf der die Manschette des jeweiligen Tanks aufliegt.

**6.** Einheit nach Anspruch 5, wobei jeder Tank mit einem Bindemittel mit seiner jeweiligen Hülse verbunden ist.

**7.** Einheit nach Anspruch 1, wobei sich an dem Fahrzeug Hebeansätze befinden.

**8.** Einheit nach Anspruch 1, wobei sich auf dem Fahrzeug eine Haltevorrichtung zur Halterung der Tanks in einer aufrechten Position befindet.

**9.** Einheit nach Anspruch 8, wobei die Haltevorrichtung eine auf dem Fahrzeug angebrachte Schiene und Bänder enthält, die die Tanks umschließen und die mit der Schiene verbunden sind.

**10.** Einheit nach Anspruch 1, weiterhin mit einer Abdeckung für die Einheit, die an dem Fahrzeug angebracht ist.

**11.** Einheit nach Anspruch 1, wobei jeder der Behandlungstanks weiterhin einen Regenerationsflüssigkeitseinlaß und einen Regenerationsflüssigkeitsauslaß beinhaltet, wodurch das Reinigungsbehandlungsmaterial in jedem der Behandlungstanks vor Ort regeneriert werden kann.

**12.** Einheit nach Anpsruch 5, wobei jeder Tank ein im wesentlichen abgerundetes unteres Ende hat.

**13.** Einheit nach Anspruch 5, wobei sich die Manschette in Nähe des unteren Endes jeden Tanks befindet.

**14.** Einheit nach Anspruch 5, wobei die Manschette auf dem Rand der Hülse aufliegt.

**15.** Bewegliches Flüssigkeitsreinigungssystem mit einer Anzahl an beweglichen Flüssigkeitsreinigungseinheiten nach einem der Ansprüche 1 bis 11, wobei das bewegliche System weiterhin mindestens eine Flüssigkeitsverbindung von jeder der Einheiten mit mindestens einer anderen Einheit aufweist, wobei die Flüssigkeitseinlaßvorrichtung einer der Einheiten eine Systemeinlaßvorrichtung ist, die dazu ausgelegt ist, an eine Zufuhr von zu reinigernder Flüssigkeit angeschlossen zu werden, und wobei die Flüssigkeitsauslaßvorrichtung einer der Einheiten eine Systemauslaßvorrichtung zum Ablassen von gereinigtem Wasser ist.

**16.** System nach Anspruch 15, wobei die Fahrzeuge Schlitten sind.

**17.** System nach Anspruch 15, wobei die Fahrzeuge einer jeden Einheit benachbart zueinander auf einem größeren Fahrzeug angebracht sind.

**18.** System nach Anspruch 17, wobei das größere Fahrzeug ein Anhänger ist.

**19.** System nach Anspruch 16, wobei eine Abdeckung das System umschließt.

**20.** System nach Anspruch 19, wobei Zugangsöffnungen in der Abdeckung nahe der Systemeinlaßvorrichtung und der Auslaßvorrichtung vorgesehen sind.

**21.** System nach Anspruch 15, wobei mindestens eine der Flüssigkeitsverbindungen zwischen jeder der Einheiten und mindestens einer anderen Einheit ein Schlauch ist.

**22.** System nach Anspruch 15, wobei jeder der Behandlungstanks weiterhin einen Regenerationsflüssigkeitseinlaß und einen Regenerationsflüssigkeitsauslaß beinhaltet, wodurch das Reinigungsbehandlungsmaterial in jedem der Behandlungstanks vor Ort regeneriert werden kann.

FIG. 1.

FIG. 2.

FIG. 3.

FIG. 4.